# EUROPEAN PATENT SPECIFICATION

(11) **EP 3 350 289 B1**
(45) Date of publication and mention of the grant of the patent: **06.05.2020**
(21) Application number: 15904211.8
(22) Date of filing: 16.09.2015
(51) Int. Cl.: C10L 1/02, C07G 1/00, C08H 7/00, C12P 7/64, D21C 11/00

(54) **A CONTINUOUS PROCESS FOR PRODUCING BIO-OIL FROM SPENT BLACK LIQUOR**
KONTINUIERLICHES VERFAHREN ZUR HERSTELLUNG VON BIOÖL AUS VERBRAUCHTER SCHWARZLAUGE
PROCÉDÉ CONTINU DE PRODUCTION D'HUILE BIOLOGIQUE À PARTIR D'UNE LIQUEUR NOIRE ÉPUISÉE

(43) Date of publication of application: 25.07.2018
(73) Proprietor: SCA Forest Products AB, 851 88 Sundsvall (SE)
(72) Inventor: KUGGE, Christian, 851 88 Sundsvall (SE); HULTGREN, Anders, 851 88 Sundsvall (SE); FRÖJDHOLM, Hampus, 857 34 Sundsvall (SE)
(74) Representative: Weickmann & Weickmann PartmbB
(86) International application number: PCT/SE2015/050969
(87) International publication number: WO 2017/048163

(56) References cited:
- WO-A1-80/01490
- WO-A1-2012/175796
- WO-A1-2013/066196
- WO-A2-2006/119357
- WO-A2-2011/117705
- US-A1- 2003 221 804
- US-A1- 2009 145 021
- US-A1- 2012 036 764
- US-A1- 2013 232 853

## Description

### TECHNICAL FIELD

The present invention relates to a process for production of bio-oil from black liquor.

### BACKGROUND ART

There is a desire to recover lignin and chemicals from spent black liquor, and methods for that are known in the art. WO2014/193289 describes a method in which lignin is precipitated from black liquor by means of an acid treatment.

Lignin can be converted to bio-oil. WO80/01490 describes at method for processing of black liquor to by heating it in a reactor with carbon monoxide and/or hydrogen under pressure, which results in conversion of organic constituents in the black liquor into a water-insoluble liquid or oil which can be separated from the water phase.

### SUMMARY OF THE INVENTION

There is a need for improved methods for recovering lignin from black liquor, and for the production of bio-oil. The present process aims at providing an efficient way of processing black liquor to obtain bio-oil.

The present invention relates to a process for continuously producing bio-oil comprising the steps of
a) forming a black liquor composition in a mixing tank (MT) by mixing
   - kraft black liquor,
   - acidifying agent (AA1), in an amount sufficient to adjust the hydroxide ion concentration of the black liquor to 1-40 g/l, preferably 5-15 g/l based on the volume of black liquor;
b) introducing the black liquor composition into a reactor (R), applying a pressure of 5-150 bar of H₂ or H_{2/}CO, and a hydrogen/ black liquor composition flow ratio of 50-3000 l/l, preferably 100-600 l/l, and reacting the black liquor composition
   - at 220-350 °C for 10-120 minutes, preferably 30-60 minutes in the absence of a solid catalyst; or,
   - at 180-240 °C for 10-120 minutes, preferably 30-60 minutes, in the presence of a solid catalyst,
      thereby causing depolymerization of lignin in the black liquor composition;
c) cooling the composition to a temperature below the boiling point of a solvent to be added in a subsequent step;
d) acidifying the composition by adding one or more acidifying agents (AA2) until a pH of 4-5 is reached;
e) adding a solvent (S) to the composition, in order to extract oil from the composition;
f) separating the composition by phase separation in a first separation step (S1) into
   - an oil phase (A) comprising solvent, oil, and organic acids,
   - a first water phase (B) comprising water, salts and non-depolymerized lignin solids,
   - a second water phase (C1) comprising water and salts;
g) filtering (F2) the first phase (A) to remove any particles;
h) desalting the filtered first phase (A) by
   i) washing it by adding water and separating by phase separation in a second separation step (S2) into
      - an oil phase (D) comprising oil and solvent,
      - a third water phase (C2) comprising salts; or
   ii) adding adsorbent and/or absorbent material or ion exchange material, or combinations thereof;
i) evaporating (E2) the solvent comprised in the oil phase (D), thus obtaining a bio-oil;
j) recycling solvent evaporated in step i) to step e).

Water of one or more of the first water phase (B), the second water phase (C1), or the third water phase (C2) is preferably added in step a), diluting the black liquor volume by 25-100 % based on the initial black liquor volume, said water having a salt concentration of 5-30 weight-% based on the weight of water. Salt is added preferably after the reaction in step b), in the form of particulate salt, preferably sodium sulphate and/or electric filter ash, or in the form of water of one or more of the first water phase (B), the second water phase (C1), and the third water phase (C2), said water having a salt concentration of 5-30 weight-% based on the weight of water. The solvent added in step e) is preferably non-miscible with water, and has a lower density than the first and second water phases (B, C1), and is preferably a polar solvent, more preferably any one of ethyl acetate, methyl isobutyl ketone (MIBK), methyl-tetrahydrofuran, and benzyl alcohol, or combinations thereof. Further, the solvent (S) added in step e) preferably has a temperature of 20-50 °C, and is added in step e) in excess to the mass of bio-oil contained in composition.

The acidifying agents (AA1) added in step a), and (AA2) added in step d), respectively, are preferably any one of CO₂, H₂S, SO₂, sulphuric acid, or acidic process water having pH 1-3, or combinations thereof, and the acidifying agent (AA2) added in step d) is preferably added successively during a time period of 45-60 minutes.

In addition, a carbonium and/or arenium ion scavenger and/or a lubricant, and/or a radical scavenger, and/or an oxygen atom transfer agent (OTA), or combinations thereof, may advantageously be added to the black liquor composition in step a), where
- said carbonium and/or arenium ion scavenger preferably is any one of phenol, 2-naphtol, catechol, methyl catechol, thymol, anisole, guaiacol, cresol, toluene, o-, m-, p- xylene, and p-cymene, or combinations thereof;
- said lubricant preferably is any one of toluene, o-, m-, p- xylene, p-cymene, gasoline, and diesel, or combinations thereof;
- said radical scavenger, preferably is any one of stilbenoids, such as piceatannol, methyl piceatannol and resveratrol, or combinations thereof; and
- said oxygen atom transfer agent (OTA) preferably is any one of anthraquinone, flavone-derived tannins, tannins with flavonoid units containing a carbonyl carbon, menadione, and quercetin, or combinations thereof.

Lignin powder may advantageously be added to the black liquor composition in step a), preferably in an amount of 40-200 weight-% of the lignin content of the black liquor, more preferably in an amount of 50-100 weight-%. The phase separation step f) is preferably initiated by agitation at 1-10 rpm, preferably 4-5 rpm for 5-30 seconds, and allowed to proceed without agitation for 15-30 minutes, or is performed with continuous stirring at 1-10 rpm, preferably 4-5 rpm. One or more of the first water phase (B), the second water phase (C1) and the third water phase (C2) may advantageously be led to an evaporation step (E1), in which any solvent comprised in the water is evaporated, and led back to step e). The bio-oil after step i) preferably has a salt content of 0-10 ppm.

The first water phase (B) comprising water, salts and non-depolymerized lignin solids is preferably filtered (F3) to separate non-depolymerized lignin from the water, and drying the separated non-depolymerized lignin to obtain lignin powder. The bio-oil after step i) is preferably subjected to distillation or reactive distillation, whereby aromatic monomers contained in the bio-oil are separated and returned to the process and added to the black liquor composition in step a) as carbonium or arenium ion scavenger.

The water of the third water phase (C2), which is separated from the second separation step (S2) may advantageously be subjected to an extended water wash, comprising adding Na₂SO₄ or electric filter ash to the water of the third water phase (C2) in an amount sufficient to give a saturated solution; separating the saturated solution by phase separation into a solvent phase (S) and a salt saturated water phase (Cs); separating the solvent phase by distillation (DT2), so that solvent, and organic acids (OA), and aromatic monomers (AM) are separated from each other; and separating the Na₂SO₄ or electric filter ash from the salt saturated water phase (Cs) by filtration (F4).

### BRIEF DESCRIPTION OF THE DRAWINGS

Figure 1 shows a schematic view of the process for producing bio-oil;
Figure 2 shows a schematic view of a process for recovery of aromatic monomers and organic acids from water separated from a water wash step in the process of Fig. 1, and which can optionally be integrated in the process.

### DETAILED DESCRIPTION

The present invention relates to a process for continuously producing of bio-oil from kraft black liquor. The process comprises the steps of forming a black liquor composition, subjecting the black liquor composition to a depolymerizing reaction in a reactor. After the reaction, the resulting composition is subjected to cooling, and optional addition of salt and/or salt containing water. Thereafter, acidifying agent is added, followed by addition of a solvent. The resulting composition is then phase separated into three phases, whereby the oil is contained in a solvent phase (A), and the water is separated into two salt containing water phases (B) and (C1), where (B) is a slurry phase comprising water, salts and precipitated non-depolymerized lignin, and (C1) comprises water salts. The separated bio-oil containing phase (A) is subjected to filtering and desalting, and the solvent comprised in the oil phase is evaporated, to obtain a bio-oil. The evaporated solvent is recycled to the process. The desalting step can be performed by water wash and separation in a second separation step into an oil-containing phase (D) and a water containing phase (C2), or by adding adsorbent, absorbent, or ion exchange material. Each step will be described in more detail below.

The process is preferably integrated with a kraft pulping process, whereby effluents and byproducts from the production of bio-oil can be recycled to the kraft pulping process as desired. The bio-oil obtained by the present process may be used in many different applications, either directly or with further modification or refining. For example, the produced bio-oil can be further processed or upgraded in a hydrotreating process (hydrodeoxygenation and hydrodesulfurization - HDO and HDS, respectively), to obtain pure hydrocarbons that can be fractionated into biofuels, such as renewable gasoline, kerosene (jet fuel) and diesel. Any branched saturated, partly saturated or unsaturated cyclic structure (C30-C50) may be used as part of lubricant formulation.

The bio-oil may also serve as feedstock to refineries or for the chemical non-fuel market. The bio-oil can for example be feedstock to various material industries with demand for polyols with high functionality, i.e. aromatic compounds or components with many OH groups, in applications such as adhesives, coatings, inks, lubricants, dyes, rubbers, plastics, hydrogels, polyurethanes, epoxy resins, furans-/bio-oil based resins, furans-/bio-oil based foams and composites, wood plastic composites, wood impregnation. Alternatively the oil can function as a binder, insulator, hardener or cross-linker in different applications. Any aromatic dimer moieties have the potential to be used as plasticizer replacing for example bisphenol A. A water-soluble copolymer at neutral pH may be created by copolymerization with acrylic acid with applications such as wet-strength agent for paper & board manufacturing or being part of a moisture barrier formulation. The bio-oil can also be of interest for the steel industry as a bio-oil surface treatment of steel may prevent rust. It may also serve as a lacquer for many other materials.

The bio-oil can be a feedstock for any method of spinning of strong carbon fibers as the bio-oil is essentially free of inorganics. A spinning process or other process for manufacturing nanoparticles or beads may fully or partly replace antimicrobial silver nanoparticles in various applications not excluding a process where the bio-oil and silver is processed together creating core/shell structures.

### FORMING BLACK LIQUOR COMPOSITION

In the present process a black liquor composition is formed in a mixing tank (MT) by mixing kraft black liquor and acidifying agent, which is preferably any one of CO₂, H₂S, SO₂, sulfuric acid, or acidic process water having pH 1-3, or combinations thereof. The acidifying agent is added in an amount sufficient to adjust the hydroxide ion concentration of the black liquor to 1-40 g/l, preferably 5-15 g/l based on the volume of black liquor.

The black liquor, which is fed to the process, typically has a solid content of 38-45% by weight. Any black liquor from the kraft pulping process can be used in the process, but the concentration of hydroxide ions (OH⁻) may need to be adjusted. Different black liquors work similarly in the reactor stage, but have been found to behave differently in the acidification step. Therefore, the hydroxide ion concentration is an important parameter that needs to be adjusted prior to the reactor. For black liquors with high hydroxide ion concentrations, typically around 30 g/l, aggregation of hemicellulose is more pronounced and the amount of non-depolymerized lignin after acidification higher-both of which are undesired results. High hydroxide ion concentrations are characteristic of black liquors from low yield kraft pulping processes, i.e. processes producing pulps with high cellulose contents and low kappa numbers. In such processes, the presence of an anthraquinone (AQ) step in the pulping process leads to less hemicellulose in the black liquor and, consequently, to a lower degree of undesired hemicellulose aggregation in the subsequent bio-oil forming process. It has been found that when using black liquor having high initial hydroxide concentration and no addition of AQ in the pulping process some, but less, hemicellulose aggregation can still be seen at the subsequent acidification step (AA2) of the present process, due to hemicellulose in the black liquor, even though the hydroxide ion concentration is adjusted from e.g. 30 g/l to 12 g/l. To address this aggregation, the hydroxide ion concentration of black liquors having high initial hydroxide ion concentration (i.e. low kappa pulp) should preferably be lowered to a greater extent, to a level of e.g. 6 g/l, to avoid aggregation during the subsequent acidification step. It has been found that when using black liquor having a relatively low hydroxide ion concentration (i.e. high kappa pulp) of e.g. 12 g/l, obtained from a process without an AQ step, no substantial aggregation occurs in the acidification step subsequent to the depolymerization reaction of the present process. If the kraft black liquor originally had a high hydroxide ion concentration (i.e. low kappa pulp), such as 30 g/l or more, the hydroxide ion concentration it may be advantageous to lower the OH⁻ concentration to a lower level, such as 5-10 g/l, whereas a kraft black liquor initially having a lower hydroxide ion concentration, such as 12-15 g/l, the hydroxide ion concentration may not need to be adjusted.

Lignin powder can advantageously be added to the black liquor composition, preferably in an amount of 40-200 weight-% of the lignin content of the black liquor, more preferably in an amount of 50-100 weight-%. By adding lignin powder, the lignin oil throughput can increase, thus giving higher product volume, although the yield may decrease. An amount of 50-100 weigt-% gives an improved lignin oil throughput, without leading to too low yield. The black liquor dissolves the added lignin powder. For example, by adding 100% lignin powder (based on lignin mass in the black liquor), the oil yield decreases ca 15%, but the total volume of oil produced will be larger. The lignin powder can originate from either softwood or hardwood. Different types of lignin powder are available, such as Lignoboost™ from Valmet, or Domtar's BioChoice™ lignin. Other alternatives are lignosulfonates from the sulfite pulping process, for example, Domsjö Fabriker and their trade name Domsjö Lignin and Borregaard in Norway have many trade names; for example Norlig, Borresperse, Borrement, Wafex and more.

The lignin powder is preferably added directly to the black liquor composition in the mixing tank. The added lignin powder can be in moist or dry form. Alternatively, it can be dissolved in white liquor prior to addition to the black liquor composition. However, white liquor causes high amounts of H₂S to be formed in the acidification process, which is undesirable.

### DILUTING THE BLACK LIQUOR

The black liquor composition is preferably diluted with water prior to the reaction, in order to improve the yield of the reaction. The water is preferably mill water recycled from subsequent separation steps of the present process, i.e. from one or more of the first water phase (B), the second water phase (C1), or the third water phase (C2), which are described in more detail below. The black liquor is preferably diluted by 25-100 % based on the initial black liquor volume, and the recycled water preferably has a salt concentration of 5-30 weight-% based on the mass of water. The salts contained in the water contribute to a more effective phase separation in the subsequent oil and water separation step. Alternatively, salt can be added after the reactor, either in the form of salt containing water, or in the form of a particulate or as a saturated slurry. By adding the salt containing water after the reactor, the reactor volume can be reduced.

### REACTION

The black liquor composition formed in the mixing tank is introduced into a reactor (R), optionally via a filtering step (F1). The reactor preferably contains inert filler material, such as quartz powder, in order to improve contact between the reactants. A H₂ or H_{2/}CO syngas pressure of 5-150 bar is applied and the hydrogen or syngas flow is set to a hydrogen or syngas/black liquor composition flow ratio of 50-3000 l/l (STP conditions), preferably 100-600 l/l (STP conditions). The flow ratio is measured according to DIN1343 and referred to in the following as STP conditions, and is the flow at standard temperature (0 °C) and pressure (101.325 kPa) The syngas should preferably comprise 5-95 weight % H₂. The reaction is performed at 220-350 °C with residence time of 10-120 minutes, preferably 30-60 minutes when no solid catalyst is used; or at 180-240 °C with residence time of 10-120 minutes, preferably 30-60 minutes, in the presence of a solid catalyst, in both cases causing depolymerization of lignin in the black liquor composition. In presence of solid catalyst hydrogen cleaves the carbon-oxygen bond in lignin to form water. Water formation (hydrogenolysis) leads to lower oxygen content in the resulting oil, which is positive for further processing of the oil. If catalyst is used in the reactor, the black liquor composition needs to be filtered before the reactor in order to remove any particles that could impede the catalyst and impair the reaction. The hydrogen causes significant H₂S formation without a solid catalyst leading to lower sulfur content in the resulting oil, which is positive for further processing of the oil, leading to a decrease in sulfur content in the final bio-oil of up to 50%.

In the reaction, a base cleaves ether bonds such as the β-O-4 ether bond in the lignin, resulting in a phenoxide RO- (where R is an aromatic ring) and an epoxide as suggested by Brendan D. Mar et al., J. Phys. Chem. A (2015), 119(24), 6551-6562, performing ab initio studies (computational chemistry) of lignin cleavage pathways. The cited work used a bulky tertbutoxide anion, which is a strong base but a poor nucleophile. The process described in the present patent application utilizes OH- which is a strong base and a strong nucleophile. It is suggested that the β-O-4 cleavage and/or other bonds in lignin give phenoxide and carbonium ion not exluding alkoxide and arenium ion. The phenoxide or alkoxide is neutralized by a sodium counterion due to the excess of sodium whereas the carbonium or arenium ion is very reactive and prone to re-polymerize. The formation of carbonium ions in acid catalyzed depolymerization is well known, whereas it has not been described in base catalyzed depolymerization. This invention benefits greatly from adding a carbonium ion scavenger as shown by less re-polymerization and less coke resulting in a higher yield of bio-oil of lower viscosity which is easy to pump solvent free at room temperature. This supports the hypothesis of carbonium ion formation in base catalyzed depolymerization. The figure below shows the β-O-4 ether bond in a small fragment of a large lignin molecule (Ref. Methods in Lignin Chemistry, Eds. S.Y. Lin and C.W. Dence, 1992). The β carbon bonding to the oxygen is on position 4 of the aromatic ring. This is the most common ether bond that is cleaved, but there are more ether bonds in lignin, and the depolymerization of lignin is not trivial and not exactly understood yet.

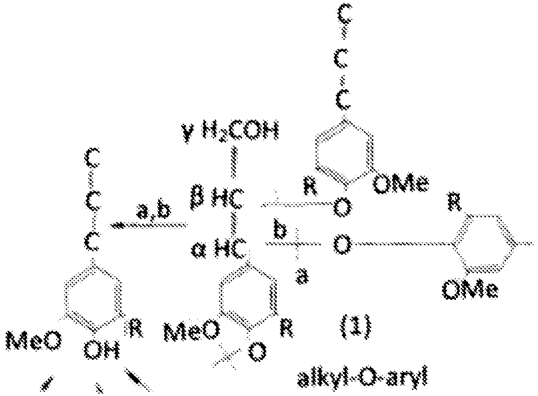

### SOLID CATALYST

The reaction is preferably preformed in the presence of a catalyst. A wide range of catalysts can be used, such as any noble metal on various support material such as carbon, activated carbon, charcoal, graphene, carbon nanotubes, graphite, alumina, aluminium phosphate, zeolite, hydrotalcite, hydroxyapatite, magnesium oxide, zirconia, titanium dioxide, ceria, chromite and molybdite. Other possible catalysts are transition metals such as V, Cr, Fe, Co, Ni, Cu, Zn, Zr, Nb, Mo and W on the same support material as above as well as transitions metals on metal-organic frameworks. Another option is NiO on the previously mentioned support materials, as well as unsupported metal particles such as transition metal, carbides and nitrides. Further unsupported catalysts that may be suitable are Co-Mo-S, MoS2, VS2, Ni-Mo and Fe-Cu bimetallic catalysts.

The total acid number (TAN) depends on temperature and TAN decreases with increasing reaction temperature as decarboxylation of the organic acids may occur easier at a higher temperature. The difference is exemplified by comparing 200 °C with 220-240 °C, where 200 °C gives a TAN on the order of 200 mg KOH/g oil and where 220-240 °C give a TAN on the order of 100 mg KOH/g oil.

### ADDITIONAL ADDITIVES

In order to improve the process, additional additives can be added to the black liquor composition prior to reaction, such as carbonium and/or arenium ion scavengers, and/or lubricants, and/or radical scavengers, and/or oxygen atom transfer agents (OTA), or combinations thereof.

Carbonium and/or arenium ion scavengers (CAIS) are preferably any one of phenol, 2-naphtol, catechol, methyl catechol, thymol, anisole, guaiacol, cresol, toluene, o-, m-, p- xylene, and p-cymene, or combinations thereof. A carbonium or arenium ion scavenger is used as a scavenger for the carbonium or arenium ion that is created in ether bond cleavages, and it thus acts as an anti-repolymerization agent. When phenol or 2-naphthol are added, the hydroxyl group of the phenol or 2-naphthol donates electrons to the aromatic ring due to the resonance effect giving it a negatively charged character. This negatively charged aromatic ring creates a C-C bond with the carbonium or arenium ion hence preventing it from re-polymerization. Phenol can be added to the black liquor composition in a phenol:lignin ratio of 0.01-1:1, preferably 0.05-0.5:1 in order to avoid unnecessary excess of phenol, and most preferably 0.05-0.15:1, in order to obtain a good balance of anti-repolymerisation and cost for the additive. It has been found that for a phenol:lignin ratio of 0.45-0.55:1, the resulting bio-oil does not smell of phenol, which indicates that no excess of phenol is present, whereas a phenol:lignin ratio of 1:1 leads to a strong smell of phenol, indicating excess phenol. An alternative CAIS is a mix of aromatic monomers from an extended water wash (which is described in more detail below), which is optionally integrated in the present process, and is described in more detail below. The exact aromatic composition is not known, but GC-MS analysis of the oil indicates that the mix contains guaiacol, catechol and methyl catechol. Further, distillation or reactive distillation of the bio-oil resulting from the present process gives aromatic monomers, such as catechol, which can be added to the black liquor composition as CAIS. The reduction product of anthraquinone in the pulping process, 9,10-dihydroxyanthracene, may also be used as CAIS. OH⁻ is a catalyst in this reaction but it is consumed by organic acids such as formic and acetic acid as they are formed by the alkaline degradation of hemicellulose. The lubricant is preferably any one of toluene, o-, m-, p- xylene, p-cymene, gasoline, and diesel, or combinations thereof. Lubricants sustain a clean reactor surface as well as giving the final crude oil a lower viscosity.

The oxygen atom transfer agent (OTA) is preferably any one of anthraquinone, flavone-derived tannins, tannins with flavonoid units containing a carbonyl carbon, menadione, and quercetin, or combinations thereof. As mentioned above catalytic amounts of anthraquinone can be added to the kraft pulping process to protect the hemicellulose from alkaline degradation, thereby increasing the pulp yield. This is explained in Handbook of Pulp (editor Herbert Sixta), and illustrated in the figure below.

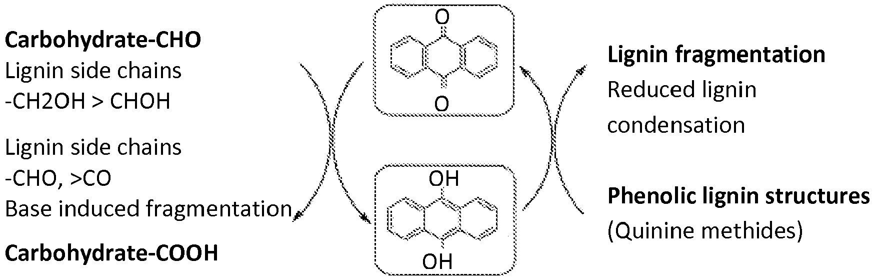

The anthraquinone is first reduced to alcohol (9,10-dihydroxyanthracene) and then oxidized back to anthraquinone. By this redox process the aldehydes of the hemicellulose (carbohydrate-CHO) is oxidized to carboxylic acids which are more stable against alkali degradation. At the same time lignin is reduced.

Adding anthraquinone or another OTA to the black liquor in the present process another mechanism may occur. Adding an OTA leads to that oxygen is transferred from lignin to hemicellulose, and in doing so the aldehydes of the hemicellulose are oxidized to more stable carboxylic acids. The carboxylic acids can be separated by distillation, leading to a bio-oil containing less oxygen. As the figure below shows, the lignin is cleaved by OH⁻ giving the alkoxide or phenoxide RO⁻ (Ref. Z. Zhu and J. Zhu, Fuel (2015) 148, 226-230). The alkoxide or phenoxide is a strong base which attacks a carbonyl carbon in anthraquinone leading to a negative charge on one oxygen. This electron pair creates a dioxirane, i.e. the functional group containing 2 oxygens in a triangle which is shown to the bottom right in the figure. Simultaneously, an R⁻ is released. This ion is protonated by water, returning the OH⁻ catalyst. The dioxirane is a good oxidant that is able to oxidize the aldehydes and even secondary alcohols of hemicellulose, hindering alkali degradation of hemicellulose.

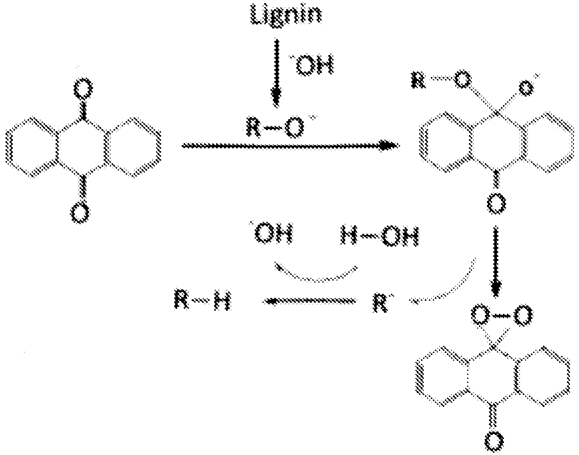

Even with addition of anthraquinone the final product contains some organic acids, since the lignin itself may create organic acids during the depolymerization. Organic acids formed from lignin explain why the OH⁻ concentration is lower after the reactor stage as the acids are consumed by OH⁻.

An important advantage of anthraquinone is that when added to high alkali black liquor (i.e. low kappa pulp), having a OH⁻ concentration of typically 30 g/l or more, it reduces the aggregation of hemicellulose and non-depolymerized lignin which are more pronounced at low kappa pulp. The residual OH⁻ concentration after the reactor stage will typically be lower without addition of anthraquinone, as compared to addition of anthraquinone. This indicates that the hemicellulose is protected by anthraquinone and that less organic acids are created, as less OH⁻ is consumed.

Addition of anthraquinone prior to the reactor may be an alternative to reduction of the OH⁻ concentration, mentioned above. Thereby aggregation of hemicellulose can be avoided and at the same time an oil of lower TAN (total acid number) and lower oxygen content can be obtained. Anthraquinone is preferably added in an amount of 1.75 wt-% of the lignin content. When anthraquinone is used in the kraft pulping process the dosage is typically 0.05-0.15 wt-% of wood.

The radical scavengers are preferably stilbenoids, such as piceatannol, methyl piceatannol or resveratrol, or combinations thereof. Radicals may be formed during the depolymerization and radical scavengers serve to hinder radical re-polymerization.

### ADDING SALT

As mentioned above, salts can be added either to the black liquor composition together with water prior to depolymerization reaction, or after the reactor in the form of particulate salt, preferably Na₂SO₄ and/or electric filter ash, or in the form of water of one or more of the first water phase (B), the second water phase (C1), and the third water phase (C2). The presence of salt contributes to an accelerated and improved separation of solvent and water in the subsequent phase separation, as the density difference between the solvent and the water phase is larger and since the solvent and bio-oil solubility in highly salted water decreases.

The water contained in the reaction blend prior to the phase separation preferably has a salt concentration of 5-30 weight-% based on the weight of water, more preferably 15-20 weight-% based on the weight of water present after the reaction. The salt can also be added in the form of electric filter ash from the kraft mill recovery boiler, which is advantageous, as mills normally have a surplus of electric filter ash. Electric filter ash typically has the following composition (weight-%): 0.6 chlorine, 29.9 sodium, 4.0 potassium, 4.9 carbonate, balance (100-chlorine-sodium-potassium-carbonate) 60.6 sulfate, and traces (<100 ppm) of Al, Si, Fe, Mg, Ca, Mn, P, B, Ba, Cu and Zn.

Even if additional salt is not added, the water phase will still contain salts originating from the black liquor, but to a lower extent.

### COOLING

After the depolymerization reaction, the composition is cooled to a temperature below the boiling point of a solvent which is added in the subsequent extraction step. The cooling may be performed in a separate cooling tank, or in a cooled acidification tank, or by means of heat exchangers. Before the cooling step the composition may be led through a condenser step, in which H₂ and other non-condensable gases are separated off, and wherein the composition is cooled to some degree. H₂ is preferably recycled to the process.

### ACIDIFYING

After cooling of the reaction composition, it is acidified by adding one or more acidifying agents (AA2) until a pH of 4-5 is reached. The acidifying agents can be any of CO₂, H₂S, SO₂, sulfuric acid, or acidic process water having pH 1-3, or combinations thereof, and are preferably added successively during a time period of 45-60 minutes.

By acidifying the composition, alkoxides and phenoxides in the composition become protonated so that the oil can be extracted to the solvent phase without the sodium counterion, and non-depolymerized lignin is precipitated.

### ADDING A SOLVENT

A solvent (S) is added to the acidified composition, in order to extract oil from the composition. The bio-oil resulting from the depolymerization reaction is polar and aromatic and is soluble in a polar solvent or an aromatic solvent. The solvent added has to be non-miscible with water. The solvent should have a lower density than the salt containing process water, preferably 0.8-1.1 g/cm³. Suitable solvents are polar or aromatic solvents, such as ethyl acetate, methyl isobutyl ketone (MIBK), methyl-tetrahydrofuran, toluene, benzene, benzyl alcohol, phenylethyl alcohol, 3-phenyl-1-propanol, anisole, o-, m-, p-xylene, and p-cymene, or combinations thereof. Polar solvents are preferred, since they often have lower boiling temperature than aromatic solvents, which gives a more economic process. Many organic compounds in the bio-oil have a high affinity to and are soluble in ethyl acetate, which can give a high yield, despite some losses of water-soluble monomers to the water phase. The preferred polar solvent ethyl acetate preferably has a temperature of above 20 °C and below its boiling point of approx. 77 °C, preferably 20-50 °C, in order to give an improved separation of solvent (A) and water (B, C1), and is preferably added in excess of the mass of bio-oil contained in composition. The preferred aromatic solvents toluene and benzyl alcohol preferably has a temperature of 50-100 °C. A higher solvent temperature may improve separation due to more rapid diffusion of the substances to be separated and decreases the risk of salt precipitation, which could occur at lower temperatures.

Advantages with ethyl acetate and methyl-tetrahydrofuran are that they can be produced sustainably from non-fossil sources. Ethyl acetate is a common solvent that is considered relatively harmless, and also has a relatively low boiling point (77 °C) which saves energy in evaporation and power of solvent recovery.

### PHASE SEPARATION OF SOLVENT/OIL AND WATER

The composition comprising bio-oil, solvent, precipitated non-depolymerized lignin, water and salts is subjected to separation in a first separation step (S1), which takes place in a separation tank wherein it is left to separate by means of phase separation into an oil phase (A) comprising solvent, oil, and organic acids; a first water phase (B) comprising water, salts and non-depolymerized lignin solids; and a second water phase (C1) comprising water and salts. The separated phases are withdrawn separately from the separation tank. As described above, salts present in the composition contribute to improved phase separation, since the salts are soluble in water and increase the density of the water phase. The first water phase (B) is a slurry phase comprising the precipitated non-depolymerized lignin. The relative volumes of phases B and C1 are dependent on the temperature in the reactor-: The phase (B) increases in volume with increasing reactor temperature, since the lignin becomes more porous.

The phase separation is preferably initiated by agitation at 1-10 rpm, preferably 4-5 rpm for 5-30 seconds, and allowed to proceed without agitation for 15-30 minutes. The very brief agitation kick-starts separation of the aqueous phase into two phases (B) and (C1). It is believed that the swirl may induce a wave upwards which pushes the solid particles upwards and at the same time induces a stable density difference between (B) and (C1). The separation can alternatively be performed with continuous slow stirring at 1-10 rpm, preferably 4-5 rpm.

The separation can be performed without agitation, but the time needed will be much longer, up to 90-120 minutes.

In addition to solvent, oil, and organic acids, the phase (A) may contain minor amounts of water, since water is soluble to a small extent in the solvent, and minor amounts of carbon particles. The separated phases (B) and (C1) may contain minor amounts of solvent, since solvent is soluble to a small extent in water. This solvent is recovered by evaporation, as described below. The water phase (C1) may also contain water-soluble monomers and organic acids.

### FILTERING OF OIL/SOLVENT PHASE (A)

The oil and solvent phase (A), separated in the first separation step (S1), is led through a filtration step (F2), to remove any fine particles that may be present therein. Particles present in this phase are likely to have a density similar to that of this phase. The fine particles separated in the filtration step may be recovered and returned to the process, e.g. by adding them together with any wash water from the filter (F2) to the water phase that comes out of the evaporator (E1). The fine particulate contained in this combined water flow corresponds to less than 1% of the lignin present in the black liquor composition. The filtered first phase (A) is then desalted by water wash, or by addition of adsorbent and/or absorbent material or ion exchange material.

### DESALTING BY WATERWASH

In the water wash, water is added to the oil and solvent phase (A), preferably in excess of the volume water present in the solvent/oil. Most of the salt present in the oil is then transferred to the water phase, and the oil/solvent/water blend is allowed to separate by means of phase separation in a second separation step (S2) into an oil phase (D) comprising oil and solvent, and a third water phase (C2) comprising the salts. The added water may be deionized water, or mill water from the kraft pulp mill, or may be recycled from the separation step (S2). Mill water may contain hemicellulose, possibly leading to a need for adjustment of the OH⁻-concentration or to a need for addition of anthraquinone in the black liquor composition.

As said above, the third water phase (C2) comprising salts from the second separation step (S2) can be re-used as water for the water wash, and by doing so the concentrations of water-soluble aromatic monomers and organic acids accumulate in water phase (C2). If desired, the water phase (C2) can be subjected to an extended water wash in order to recover aromatic monomers and organic acids that may be present therein.

As mentioned above, water from the phase separation steps can also be recycled to the process and be used to dilute the black liquor composition, thereby salts contained in the water of the process repeatedly contribute to improved phase separation in the first separation step. Water from the phase separation steps that is not recycled to the process but evaporated may be recycled to the kraft pulping process.

### DESALTING BY ADDING ADSORBENT

Desalting of the oil/solvent phase can also be obtained by letting the oil/solvent pass through a bed of adsorbent and/or absorbent material or ion exchange material, or combinations thereof. The adsorbent and/or absorbent material or ion exchange material can be regenerated on site with various methods, which are known in the art. This method of desalting is preferred in continuous production of bio-oil, since it gives a more effective process, and decreases the loss of product.

### EVAPORATING SOLVENT FROM OIL/SOLVENT PHASE (D)

After desalting, the oil/solvent phase (D) is led to an evaporation step (E2), in which the solvent comprised in the oil/solvent phase is evaporated, and a substantially solvent free bio-oil phase is obtained. The solvent is/may be recycled to the step of addition of solvent before the first separation step.

If desired, all solvent need not be evaporated, but can remain in the bio-oil to some extent, in order to make the oil easy to pump. If some solvent is left to remain in the product, thus leaving the process, this amount of solvent needs to be replaced by a corresponding amount of fresh solvent. The final bio-oil preferably has as low salt content as possible, preferably less than 10 ppm, in order to allow further processing.

### EVAPORATING SOLVENT FROM WATER PHASES (B, C1, C2)

Even if the phase separation in the first and second phase separation steps is effective, small amounts of solvent remain in the water phase due to solvent solubility in water. One or more of the water phases from the first and second phase separation steps, i.e. the first water phase (B), the second water phase (C1) and the third water phase (C2), are therefore preferably led to an evaporation step (E1), in which any solvent comprised in the water is evaporated, and led back to the process. The evaporator of this step (E1) is larger than the one used for evaporation of solvent (E2), since it takes streams from the water phase coming from the filtration of non-depolymerized lignin and water from the water wash. The water phase that comes out from this larger evaporator (E1) may contain fine particulates that correspond to less than 1% of the lignin present in the black liquor composition. The recovery of solvent is desirable, due to the cost of solvents, but is also advantageous for safety reasons, since a sudden addition of solvent to the reactor would increase the pressure.

### FILTERING OF WATER PHASE (B)

As mentioned above, the first water phase (B) from the first phase separation step comprises water, salts and non-depolymerized lignin solids. This phase may be filtered in a filtration step (F3) to separate non-depolymerized lignin from the water. Water/acid washing and drying of the separated non-depolymerized lignin gives a lignin powder, which can be added to the black liquor composition if desired. Alternative uses of this powder are numerous, e.g. recycling of the powder back to the kraft mill process or use of the powder as activated carbon, carbon black or bringing it to the market as a solid bio-fuel. Approximately 15-25% of the lignin contained in the black liquor composition before reaction ends up as non-depolymerized lignin powder after filtration, water/acid washing and drying. This fraction increases with increasing amount of lignin added to the reactor.

### EXTENDED WATER WASH

As mentioned above, the water phase (C2) separated in the second separation step (S2) can be recycled and re-used as washing water in the desalting of the filtered bio-oil containing phase A. After having been recycled multiple times, it may contain substantial amounts of accumulated monomers and organic acids in addition to the salts removed from the oil phase A. The water phase (C2) also comprises a small amount of solvent, due to the solvent solubility in water. For example, the solubility of ethyl acetate in water is 83 g/l at 20 °C. It may be desirable to recover the monomers and organic acids and the water phase (C2) can then be subjected to an extended water wash, where the monomers and organic acids are recovered by saturating the water phase with Na₂SO₄ or electric filter ash from the kraft mill. The water phase (C2) is led to an extended water wash, where Na₂SO₄ or electric filter ash is added, in order to saturate the water with salts, thereby obtaining a composition comprising a water part and a solvent part, where the solvent part has a maximised concentration of aromatic monomers and organic acids. The composition is allowed to phase separate, into a solvent phase comprising aromatic monomers and organic acids, and a salt saturated water phase. The solvent phase is decanted off and distilled so that solvent and organic acids are separated from high boiling aromatic monomers. The solvent and the aromatic monomers can be recycled to the process. The water phase (Cs) is led to filtration step (F4), in which Na₂SO₄ is filtered off. This filtration is preferably a cold filtration in order to maximise recovery of Na₂SO₄ as the solubility thereof is lower at lower temperature. The filtered water can be returned to the kraft mill, and the recovered Na₂SO₄ can be recycled to the extended water wash process.

### DESCRIPTION OF DRAWINGS

The process of the present invention will now be described with reference to the drawings.

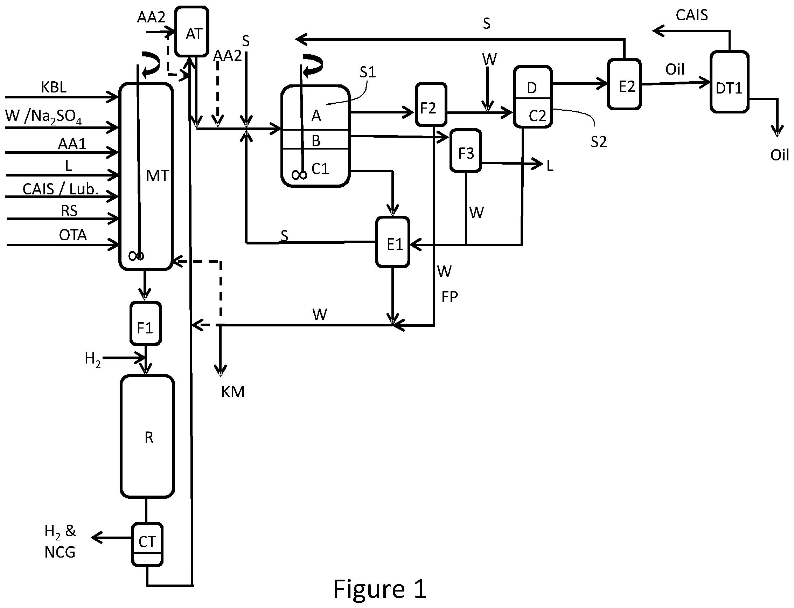

Figure 1 illustrates schematically an example of a process according to the invention.

Kraft black liquor (KBL), acidifying agent (AA1), and optionally water (W) recycled from subsequent separation steps are charged into a mixing tank (MT) and mixed in order to form a black liquor composition. Further additives, such as carbonium or arenium ion scavengers (CAIS), lubricant (Lub), radical scavengers (RS) and/or oxygen atom transfer agents (OTA) can also be added to the mixing tank. Lignin powder (L) can also be added to the black liquor composition. The black liquor composition is optionally filtered (F1) and transferred to a reactor (R), optionally comprising inert filler material. A hydrogen pressure is applied to the reactor (R), and a desired flow ratio between black liquor composition and hydrogen is set. The black liquor composition is subjected to a de-polymerisation reaction at a temperature 180-240 °C, with a residence time of 10-120 minutes.

The composition is then transferred from the reactor to a condenser (CT) where the composition is cooled to below 100 °C, and H₂ and other non-condensable gases (NCG) are separated. H₂ is preferably recycled to the process. Thereafter, the composition is transferred to a cooling and acidification step (AT), where the composition is cooled to a temperature below the boiling point of a solvent that is to be added subsequently. The composition can be acidified by addition of an acidifying agent (AA2) in the tank (AT), or directly to the flow of black liquor composition before or after the cooling step. After cooling and acidifying, a solvent is added. The resulting composition is allowed to separate in a separator tank (S1), by means of phase separation into a solvent/oil phase (A) comprising mainly solvent, oil, organic acids; a water phase (B) comprising mainly water, salts and non-depolymerized lignin solids; and a water phase (C1) comprising mainly water, salts and water-soluble monomers and organic acids. The water phase (B) is led to a filter (F3) where the non-depolymerized lignin solids (L) are filtered off.

The separated solvent/oil phase (A) is filtered (F2) in order to remove and fine particulate (FP) and is then subjected to desalting by means of water wash, after which it is allowed to separate in a separator tank (S2) into a desalted solvent/oil phase (D) and a water phase (C2) comprising water and salts. The particulate from the filter (F2) is led back to the returning water flow. Alternatively, the desalting can be performed by addition of adsorbents (not shown). The solvent (S) is evaporated off from the solvent/oil phase in an evaporator (E2) and is led back to the step for addition of solvent (S) to the acidified reaction composition. If desired, the resulting oil from phase (D) can be subjected to distillation or reactive distillation in a distillation tower (DT1).

The water phases (C1), (C2) and water (W) from the filtered phase (B) are led to an evaporator (E1) where any solvent (S) contained in the water due to solvent solubility in water is evaporated and led back to the process. After evaporation, the water may be used for diluting the black liquor composition in a subsequent batch or may be returned to the kraft mill (KM).

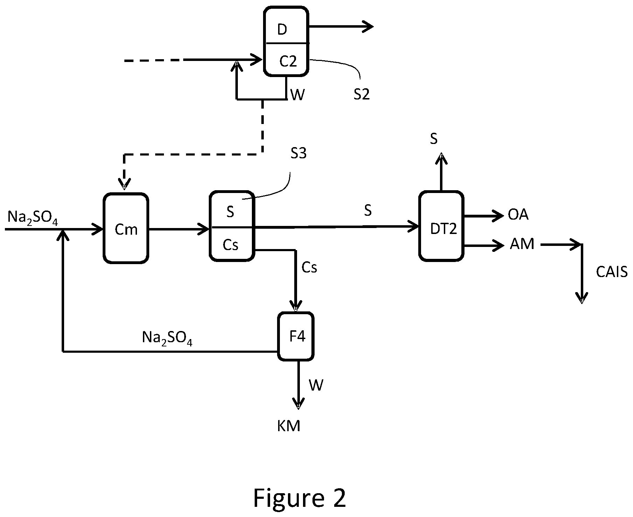

Figure 2 schematically illustrates an example of the extended water wash which is used for the water phase (C2) separated after the desalting step. The separator tank 2 of the bio-oil producing step is shown at the top of Fig. 2. Here, the re-use of the water phase (C2) in the desalting step of the process in Fig. 1 is also shown. The water phase (C2) is led to an extended water wash, where Na₂SO₄ or electric filter ash is added to form a composition (Cm) with maximised concentration of aromatic monomers and organic acids in the solvent phase.

The composition (Cm) is allowed to separate into a solvent phase (S) comprising aromatic monomers and organic acids, and a salt saturated water phase (Cs). The solvent phase (S) is decanted off and distilled in a distillation tower (DT2) so that solvent and organic acids are separated from high boiling aromatic monomers. The solvent is re-used in the process of Fig. 1, and the aromatic monomers can be used as carbonium or arenium scavenger in the black liquor composition formed in Fig. 1. The water phase (Cs) is led to filtration step (F4), in which Na₂SO₄ is filtered off. The water from the filter (F4) is returned to the kraft mill (KM).

### EXAMPLES

The following Examples illustrate the method of producing bio-oil in further detail. The acidification was performed by drop wise addition of concentrated Na₂SO₄ during approximately 15-20 minutes, unless otherwise indicated.

### EXAMPLE 1

105 ml black liquor (solid content 41 wt-%, lignin content 190 g/l) was added to a 300 ml pressure reactor. This equals a lignin mass of 19.95 g. The black liquor was diluted with 55 ml of a 20 wt-% aqueous Na₂SO₄ solution to adjust the hydroxide ion concentration to 10.1 g/l. The reactor was flushed with nitrogen for 30 seconds followed by flushing with hydrogen for 10 seconds, and was then loaded with 30 bar hydrogen.

After flushing and pressurization, the temperature was increased to 240 °C during 90 minutes. The temperature was then kept at 240 °C for 30 minutes. The final H₂ pressure was 58 bar. After this the reactor was cooled by immersion in a water bath to allow the material to reach a temperature well below the boiling point of the subsequently added polar solvent. This resulted in a temperature below approximately 60 °C. The material in the reactor was transferred to a beaker and then acidified to pH 4-5 by addition of concentrated H₂SO₄ at 30-40 °C during stirring. Acidification led to precipitation of the portion of the lignin that had not de-polymerized in the reactor, resulting in a suspension containing non-depolymerized lignin precipitate.

Thereafter 200 ml polar solvent was added to the suspension in the beaker. The polar solvent used was ethyl acetate. Addition of the polar solvent led to extraction of oil into a solvent phase (A) containing polar solvent, oil, and organic acids, and initiated a separation process of the oil phase from the rest of the material. The separation was kick-started by agitation and the suspension was left to separate during 1 hour. During extraction, the aqueous phase separated into one phase (B) containing non-depolymerized lignin located between the top oil phase(A), and a bottom phase (C) which contained water, water-soluble monomers and organic acids. The solvent-containing oil phase (A) was decanted off, and left a water phase suspension (B), and a water phase (C). A very brief agitation kick-started separation of the aqueous phase into two phases (B and C1).

The polar solvent was separated from the bio-oil by a rotary evaporator at 30 °C and 65 mbar and the evaporating time was set to 20 minutes. The bio-oil yield was based on the mass of lignin added to the reactor, calculated gravimetrically, ignoring any small content of hemicellulose in the black liquor and its possible contribution to the bio-oil as organic acids. The bio-oil mass was 18.0 g, and the bio-oil yield was 90%, with almost 10% non-depolymerized lignin and some losses in the form of acid soluble lignin dissolved in the water phases (B) and (C) as well as a minor fraction (<1%) of fine carbon particles in the solvent present in phase (A).

The procedure presented in Example 1 gave an oil of the following characteristics:
- Weight average molecular weight: 660 g/mol with a polydispersity of 1.85.
- 1-2 weight-% water based on the total weight of the oil
- Total acid number (TAN) 114 mg KOH/g oil.
- Oxygen content 29.6 weight-%
- Heat value 7.215 MWh/ton.
- Sodium and potassium content 700 ppm
- Sulfur content 1.4%

Example 1 was repeated without applying a H₂ pressure to the reactor, which gave a resulting oil having a sulfur content of 2.3%. This indicates that the process provides some hydrodesulfurization (HDS) without any specific HDS catalyst.

### EXAMPLE 2 - Addition of lignin powder to the reactor

95.2 g black liquor (solid content 41 wt-%, lignin content 190 g/l) was added to a 300 ml pressure reactor. This equals a lignin mass of 14.74 g. The black liquor was then diluted with 94.2 g, 20 wt-%, Na₂SO₄, to adjust the hydroxide ion concentration to 7.2 g/l.

13 g of a washed lignin powder (BioChoice from Domtar) was added to the reactor, in order to almost double the lignin content. The lignin powder was left to dissolve in the black liquor for 5 minutes before the reactor was started. The reactor was flushed with nitrogen for 30 seconds and flushed with hydrogen for 10 seconds and then loaded with 30 bar hydrogen. After flushing and pressurization, the temperature was increased during 90 minutes to reach 240 °C. The reaction was allowed to proceed for 30 minutes at 240 °C. This resulted in a final pressure of 58 bar.

After this the reactor was cooled by immersion in a water bath to allow the material to reach a temperature well below the boiling point of the subsequently added polar solvent. This resulted in a temperature of approximately 30 °C. It was noted that the hydrogen pressure was 28 bar at this temperature, which means that 2 bar hydrogen gas was consumed. This indicates that HDS has taken place.

The material in the reactor was transferred to a beaker, acidified, and subjected to extraction and separation in the same way as described in Example 1. The polar solvent was evaporated from the oil phase in the same way as described in Example 1. The bio-oil yield was 65%, based on the mass of lignin added to the reactor and calculated gravimetrically.

### EXAMPLE 3 -Long residence time in reactor

Example 1 was repeated with a residence time in the reactor of 15 h. The hydrogen consumption was 10 bar, indicating hydrogenolysis of the lignin. For longer residence times the non-depolymerized lignin is more like fine powder as compared to the black sticky non-depolymerized lignin material obtained with shorter residence time. The bio-oil yield was 73%.

### EXAMPLE 4 - No dilution of the black liquor

97.76 g black liquor (solid content 41 wt-%, lignin content 190 g/l) was added to a 300 ml pressure reactor. This equals a lignin mass of 15.14 g. The reactor was flushed with nitrogen for 30 seconds prior heating. After flushing the temperature was increased for 60 minutes to reach 220 °C and then continued to increase to 230 °C with a residence time of 60 minutes between 220-230 °C and where the residence time at 230 °C was 30 minutes. The final pressure was 27 bar.

The bio-oil mass after the work-up procedure described in example 1 was 12.77 g giving a yield of 84%.

### EXAMPLE 5 - Lowering hydroxide ion concentration prior to reaction

5.1 ml concentrated sulfuric acid and 100 ml water was added to 200 ml black liquor of high alkali concentration (32 g/l) to create a black liquor of 12 g/l alkali concentration. 160 ml of this black liquor composition was added to the 300 ml pressure reactor. The reactor was flushed with nitrogen for 30 seconds prior heating. After flushing, the temperature was increased for 72 minutes to reach 240 °C and then continued to increase to 250 °C with a residence time of 60 minutes between 240-250 °C and where the residence time at 250 °C was 30 minutes. The final pressure was 40 bar.

Following the work-up procedure presented in Example 1, the acidification step caused some aggregation of non-depolymerized lignin resulting in a bio-oil yield of 61%.

### EXAMPLE 6 - Lowering hydroxide ion concentration prior to reaction

6.6 ml concentrated sulfuric acid and 100 ml 20 wt-% Na₂SO₄ solution was added to 200 ml black liquor of high alkali concentration (32 g/l) to create a black liquor of 6 g/l alkali concentration. 160 ml of this black liquor was added to the 300 ml pressure reactor. The reactor was flushed with nitrogen for 30 seconds prior heating. After flushing, the temperature was increased for 70 minutes to reach 240 °C and then continued to increase to 250 °C with a residence time of 60 minutes between 240-250 °C and where the residence time at 250 °C was 30 minutes. The final pressure was 37 bar.

Following the work-up procedure presented in Example 1, the acidification step caused no aggregation of non-depolymerized lignin resulting in a bio-oil yield of 71%.

### EXAMPLE 7 - Desalting by water wash

2 gram bio-oil from Example 1 was water washed by adding 1:1 deionized water to a solution of ethyl acetate/bio-oil. The mixture was thoroughly mixed, and let to separate for 5 minutes into a solvent/bio-oil phase and a water phase. The solvent/bio-oil phase was decanted off from the water phase, and then solvent evaporated to give a desalted bio-oil product. The sodium and potassium content of the oil before the water wash was 4200 ppm and 438 ppm, respectively. The sodium content of the oil after the water wash was 12 ppm and the potassium content was 5 ppm. The water wash also removes more organic acids, thus creating a bio-oil of lower TAN.

### EXAMPLE 8 - Desalting by adsorbent

2 gram bio-oil from Example 1 was desalted by adding 5 gram adsorbent (UOP product AW-500) to a solution of ethyl acetate/bio-oil. The adsorbent was a 1/16 inch pellet. The adsorbent is provided as H⁺ form and able to adsorb sodium, potassium and other one valence cations and release H⁺. The residence time for this desalting procedure was at least 20 minutes without stirring. The sodium and potassium content before adding the adsorbent was 4200 ppm and 438 ppm respectively. The sodium content after the desalting was 30 ppm and potassium content was 26 ppm.

### EXAMPLE 9 - Desalting by molecular sieves

2 gram bio-oil from Example 1 was desalted by adding 4 gram absorbent in the form of molecular sieves (4 Å) to a solution of ethyl acetate/bio-oil. The molecular sieves are provided as granulate. The molecular sieves are able to absorb water and thereby absorbing sodium, potassium and other cations and release heat. The residence time for this desalting procedure was at least 20 minutes without stirring. The sodium and potassium content before adding the absorbent was 4200 ppm and 438 ppm respectively. The sodium content after the desalting was 200 ppm and potassium content was 10 ppm.

### EXAMPLE 10 - Desalting by cation exchanger

14.7 gram bio-oil from Example 1 was desalted by adding a 10.4 gram cation exchanger (Amberjet™ 1200 Na by Rohm&Haas) to a solution of ethyl acetate/bio-oil. The cation exchanger was provided as spherical beads and in a Na⁺ form and required a cation exchange to obtain the H⁺ form before it was used. This was performed by adding 50 gram cation exchanger to 250 ml H₂SO₄ (10 wt-%). The mixture was let to rest for 2 hours without stirring in order not to destroy the fragile cation exchanger. Following this the cation exchanger was filtered off and washed with deionized water. Now in H⁺ form the cation exchanger is able to adsorb sodium, potassium and other mono valent cations and release H⁺. The residence time for this desalting procedure was at least 20 minutes without stirring. The sodium and potassium contents before adding the adsorbent were 340 ppm and 81 ppm respectively. The sodium and potassium content after the desalting procedure was 169 ppm and 36 ppm respectively.

### EXAMPLE 11 - Addition of oxygen atom transfer agent (OTA)

Example 1 was repeated without hydrogen and with an addition of 1.75 wt-% anthraquinone (AQ), based on the lignin content for a black liquor of high alkali (32.1 g/l OH⁻). This was a commercial AQ with product name WiDAQ 50 (WIBAX supplier). The hydroxide ion concentration after the reactor step was 7.6 g/l, and the same experiment without AQ gave also a hydroxide ion concentration of 7.6 g/l. This indicates that AQ is not protecting the hemicellulose from alkali degradation under these conditions, but may do so at other process conditions. Some aggregation of non-depolymerized lignin occurs but to a much less extent than no AQ addition.

The elemental analysis of the bio-oil obtained in Example 11 gave the following results (given as percentages of the total mass):
C = 59.9
H = 6.2
N < 0.10
S = 1.50
O (calculated) = 32.4

This indicates that AQ increases the oxygen content in the final bio-oil. Adding AQ to a black liquor of high hydroxide ion concentration is an alternative to acidify prior the reactor step due to the low degree of aggregation of non-depolymerized lignin. AQ is also a yield-enhancing additive. The bio-oil yield was 99%.

### EXAMPLE 12- Addition of oxygen atom transfer agent (OTA)

Example 1 was repeated without hydrogen for a black liquor of low alkali (12 g/l OH⁻) and with an addition of 1.75 wt-% (based on the lignin content) anthraquinone (AQ) . This was a commercial AQ with product name WiDAQ 50 (WIBAX supplier). The hydroxide ion concentration after the reactor step was <0.1 g/l, and the same experiment without AQ gave also a residual alkali of <0.1 g/l. No aggregation of non-depolymerized lignin occurred.

The elemental analysis of the bio-oil obtained in Example 12 gave the following results (given as percentages of the total mass):
C = 56.6
H = 6.0
N < 0.10
S = 1.47
O (calculated) = 35.9

This indicates that AQ increases the oxygen content in the final bio-oil, even though the bio-oil may contain less oxygen if organic acids are removed. AQ is a yield-enhancing additive, and has potential to reduce aggregation. The bio-oil yield was 98%.

### EXAMPLE 13 - Preparation of radical scavenger

Tannins and stilbenoids were prepared by cooking softwood bark in 100 °C water for 5 minutes. The bark was filtered off and the water extract containing tannins, stilbenoids and hemicellulose were cooled down to room temperature. Ethanol, an anti-solvent for hemicellulose was added to the water extract in 1:1 (ethanol/water) volume ratio for precipitating the hemicellulose which is then filtered off leaving only tannins and stilbenoids in the water extract. The water extract was evaporated to give dry product.

### EXAMPLE 14 - Addition of radical scavenger to the black liquor composition

6.5 gram of the product obtained in Example 13 was dissolved in 68 ml water and added to 83.2 gram black liquor (13 g lignin). The reactor was flushed with nitrogen for 30 seconds. After flushing the temperature was increased for 60 minutes to reach 220 °C and then further increased to 230 °C with a residence time of 60 minutes between 220-230 °C and where the residence time at 230 °C was 30 minutes. The final pressure was 28 bar.

The bio-oil mass after the work-up procedure described in Example 1 was 11.92 g giving a bio-oil yield of 62%.

The final bio-oil has somewhat lower viscosity than Example 1 as judged by visual appearance of flow. This indicates some hindering of radical re-polymerization.

### EXAMPLE 15 - Addition of phenol as carbonium or arenium ion scavenger (CAIS) to the black liquor composition

Example 1 was repeated for a black liquor of low alkali (12 g/l OH⁻) but without hydrogen and with addition of phenol (0.5:1 phenol/lignin mass ratio). After flushing the reactor with nitrogen the temperature was increased for 60 minutes to reach 220 °C and then further increased to 230 °C with a residence time of 60 minutes between 220-230 °C and where the residence time at 230 °C was 30 minutes. The final pressure was 29 bar.

For this addition level of phenol the final bio-oil did not smell phenol, as was the case when excess phenol was added (phenol/lignin ratio 1:1). The final bio-oil had a much lower viscosity than the one obtained in Example 1 as judged by visual observation of flow. The bio-oil yield was 95%.

### EXAMPLE 16 - Addition of thymol as carbonium or arenium ion scavenger (CAIS) to the black liquor composition

Example 1 was repeated for a black liquor of low alkali (12 g/l OH⁻) but without hydrogen and with addition of thymol (0.5:1 thymol /lignin mass ratio). After flushing the reactor with nitrogen the temperature was increased for 60 minutes to reach 220 °C and then further increased to 230 °C with a residence time of 60 minutes between 220 and230 °C and where the residence time at 230 °C was 30 minutes. The final pressure was 28 bar.

The final bio-oil had a much lower viscosity than the one obtained in Example 1 as judged by visual observation of flow. The bio-oil yield was 99%.

### EXAMPLE 17- Addition of catechol as carbonium or arenium ion scavenger (CAIS) to the black liquor composition

Example 1 was repeated for a black liquor of low alkali (12 g/l OH⁻) but without hydrogen and with addition of catechol (0.5:1 catechol /lignin mass ratio). After flushing the reactor with nitrogen the temperature was increased for 60 minutes to reach 220 °C and then further increased to 230 °C with a residence time of 60 minutes between 220-230 °C after which the temperature was kept at 230 °C for 30 minutes. The final pressure was 28 bar.

The final bio-oil had a much lower viscosity than the one obtained in Example 1 as judged by visual observation of flow. The bio-oil yield was 49.6%. Despite a low alkali the yield was low due to aggregation of hemicellulose in the acidification step.

### EXAMPLE 18 - Addition of catechol as carbonium or arenium ion scavenger (CAIS) to the black liquor composition (low addition)

Example 1 was repeated for a black liquor of low alkali (12 g/l OH⁻) but without hydrogen and with addition of catechol (0.2:1 catechol /lignin mass ratio). After flushing the reactor with nitrogen the temperature was increased for 60 minutes to reach 220 °C and then further increased to 230 °C with a residence time of 60 minutes between 220-230 °C and where the residence time at 230 °C was 30 minutes. The final pressure was 28 bar.

The final bio-oil had a much lower viscosity than the one obtained in Example 1 as judged by visual observation of flow. The bio-oil yield was 93%. No aggregation in the acidification step was observed, which is the explanation to the higher yield.

### EXAMPLE 19 - Addition of toluene as carbonium or arenium ion scavenger (CAIS) to the black liquor composition

Example 1 was repeated for a black liquor of low alkali (12 g/l OH⁻) but without hydrogen and with addition of toluene (0.5:1 toluene /lignin mass ratio). After flushing the reactor with nitrogen the temperature was increased for 60 minutes to reach 220 °C and then further increased to 230 °C with a residence time of 60 minutes between 220-230 °C and where the residence time at 230 °C was 30 minutes. The final pressure was 39 bar.

The final bio-oil had a lower viscosity than the one obtained in Example 1 as judged by visual observation of flow. The bio-oil yield was 52%.

### EXAMPLE 20 - Homogenous (alkali) and heterogeneous catalysts

128.6 g black liquor of low alkali (12 g/l OH⁻) was diluted with 55 ml deionized water and a heterogeneous catalyst, 5% palladium on carbon (0.43:1 Pd/C:lignin mass ratio) was added. After flushing the reactor with first nitrogen and then hydrogen, followed by pressurization of the reactor with 30 bar hydrogen, the temperature was increased during 60 minutes to 220 °C and then further increased to 230 °C with a residence time of 60 minutes between 220-230 °C and where the residence time at 230 °C was 30 minutes. The final pressure after the reaction was 40 bar. This means that 18 bar hydrogen was consumed during this process indicating significant hydrogenolysis.

The heterogeneous catalyst was filtered off and the liquid was acidified. During the acidification step some aggregation occurred. These aggregates were later dissolved by the solvent ethyl acetate. The following phase separation was instantaneous.

The final bio-oil had a much lower viscosity than the one obtained in Example 1 as judged by visual observation of flow. The bio-oil yield was 99% following the work-up procedure given in Example 1.

### EXAMPLE 21 - Homogenous (alkali) and heterogeneous catalysts and 2-phase cooking (black liquor/solvent)

129.9 g black liquor of low alkali (12 g/l OH⁻) was diluted with 55 ml of a 20 wt-% aqueous solution of Na₂SO₄ and added to the unwashed Pd/C catalyst used in Example 20. The Pd/C:lignin mass ratio was 0.33. 23 ml toluene (1:1 toluene:lignin mass ratio) was added to the reactor providing a 2-phase cooking process.

After flushing the reactor with first nitrogen and then hydrogen followed by pressurization of the reactor with 32 bar hydrogen, the temperature was increased during 60 minutes to 220 °C and then further increased to 230 °C with a residence time of 60 minutes between 220-230 °C and where the residence time at 230 °C was 30 minutes. The final pressure after the reaction was 70 bar. The pressure after cooling was 30 bar, indicating a hydrogen consumption of 2 bar and some hydrogenolysis.

The heterogeneous catalyst was filtered off and the bio-oil yield was 99% following the work-up procedure given in Example 1. The final bio-oil had a much lower viscosity than the one obtained in Example 1 as judged by visual observation of flow.

### EXAMPLE 22 -hydrogen and residence time 60 minutes

Black liquor (solid content 41 wt-%, lignin content 190 g/l) was diluted with 75% water in relation to the black liquor volume and used as feedstock. The feedstock was pre-heated to the reactor temperature, 220 °C, in a mixer tank. Prior to the reactor the feedstock was filtered through a 10 micron filter to remove any larger particles.

The reactor length was 580 mm and the internal diameter was 4.1 mm. The reactor was loaded with inert filling in the form of quartz powder (100-350 µm) in a volume of 7.66 ml. The reactor was pressurized with nitrogen for a tightness test.

Hydrogen was added to the liquid feed at a constant flow rate of 3.5 l/h (STP conditions). The liquid feed mass flow was 7.2 g/h (6.29 ml/h) giving a hydrogen/liquid feed flow ratio (referred to as GTL) of 556l/l (STP conditions). The pressure in the reactor was 100 bar. The residence time in the rector was 60 minutes. The feedstock was passed through the reactor for 72 h with no indication of coke formation.

After passing through the reactor the material was collected in a condenser and cooled to reach a temperature of 30-40 °C, well below the boiling point of the subsequently added polar solvent in the form of ethyl acetate. The material passing through the reactor and the condenser was transferred to a beaker and then acidified to pH 4-5 by concentrated H₂SO₄ at 30-40 °C during stirring. Acidification led to precipitation of the portion of the lignin that had not de-polymerized in the reactor. This resulted in a suspension containing non-depolymerized lignin precipitate.

Following the acidification ethyl acetate, a polar solvent was added in excess of the bio-oil within the suspension in the beaker. Addition of a polar solvent initiated a separation process leading to extraction of a solvent/oil phase (A) in Separator tank 1) from the rest of the material. During extraction, the aqueous phase separated into one phase (B) containing precipitated non-depolymerized lignin located between the top oil phase and a bottom phase (C) which contained water, water-soluble monomers and organic acids. Without agitation in the separator tank this 3-phase separation takes 1.5-2 hours. Separation can be accelerated by gentle agitation. Under agitation a good separation was achieved in 20 minutes.

The polar solvent (ethyl acetate) was separated from the bio-oil by a rotary evaporator at 30 °C and 65 mbar and where the evaporating time was set to 20 minutes. The bio-oil yield was based on the mass of lignin added to the reactor, calculated gravimetrically, ignoring the small content of hemicellulose in the black liquor and its contribution to the bio-oil as organic acids.

The bio-oil yield was 59%. The mass balance was determined as mass flow of the liquid material leaving the reactor divided by the mass flow of the feed entering the reactor. The mass balance was 78%. The volume of the gaseous products was measured by a gas counter leading to an estimate of water content in the gaseous products. The water content was 11.8%. The total acid number (TAN) was 106 mg KOH/g oil.

### EXAMPLE 23 - no hydrogen and residence time 30 minutes

Example 1 was repeated with no hydrogen applied and a shorter residence time, 30 minutes. The feedstock was passed through a shorter reactor of 290 mm having an internal diameter of 4.1 mm. The reactor was loaded with inert filling in the form of quartz powder (100-350 µm) in a volume of 3.83 ml. No indication of coke formation was observed for 48 h. The bio-oil yield was 55% and the mass balance was 85%. The mass balance was higher than Example 1 as there was no water loss via gaseous products. TAN was 111 mg KOH/g oil.

### EXAMPLE 24

A black liquor (solid content 41 wt-%, lignin content 190 g/l) was diluted with water and used as feedstock. The water volume was 75% of the volume of the black liquor. The feedstock was pre-heated to the reactor temperature, 240 °C, in the mixer tank. Prior to the reactor the feedstock was filtered through a 10 micron filter to remove any larger particles.

The reactor length was 290 mm and the internal diameter was 4.1 mm. The reactor was loaded with inert filling, quartz powder (100-350 µm). The volume loaded was 3.83 ml. The reactor was pressurized with nitrogen for a tightness test. Hydrogen was added to the liquid feed at a constant flow rate of 3.5 l/h (STP conditions). The liquid feed mass flow was 7.2 g/h (6.29 ml/h) giving a hydrogen/liquid feed flow ratio (referred to as GTL) of 556 l/l (STP conditions).The pressure in the reactor was 150 bar. The residence time in the rector was 30 minutes. The feedstock was passed through the reactor for 48 h with no indication of coke formation. The bio-oil yield was 73%.

The mass balance was determined as mass flow of the liquid material leaving the reactor divided by the mass flow of the feed entering the reactor. The mass balance was 89%. The volume of the gaseous products was measured by a gas counter leading to an estimate of water content in the gaseous products. The water content was 11.3%. TAN was 106 mg KOH/g oil.

### EXAMPLE 25

Example 3 was repeated with a reactor temperature of 250 °C and at this temperature there was coke formation after 4 h as shown by an increasing reactor pressure. TAN was 108 mg KOH/g oil.

### EXAMPLE 26

Black liquor (solid content 41 wt-%, lignin content 190 g/l) was diluted with water and used as feedstock. The water volume was 75% of the volume of the black liquor.. The feedstock was pre-heated to the reactor temperature, 200 °C, in the mixer tank. Prior the reactor the feedstock was filtered through a 10 micron filter to remove any larger particles.

The reactor was pressurized with nitrogen for a tightness test. The reactor length was 330 mm and the internal diameter was 4.0 mm. The reactor was loaded with a solid catalyst in a 1:1 mass ratio of inert quartz (100-350 µm) filling material at a total volume of 4.15 ml. The solid catalyst was Pt/C, (5% platinum on active charcoal). Hydrogen was added to the liquid feed at a constant flow rate of 3.5 l/h (STP conditions). The liquid feed mass flow was 7.2 g/h (6.29 ml/h) giving a hydrogen/liquid feed flow ratio (referred to as GTL) of 556.

The pressure in the reactor was 50 bar. The residence time in the rector was 30 minutes. The feedstock was passed through the reactor and showed evidence of coke formation after 12 h operation.

The bio-oil yield was 53%. The mass balance was determined as mass flow of the liquid material leaving the reactor divided by the mass flow of the feed entering the reactor. The mass balance was 76%. TAN was 108 mg KOH/g oil.

### EXAMPLE 27

Black liquor (solid content 41 wt-%, lignin content 190 g/l) was diluted with water and used as feedstock. The water volume was 75% of the volume of the black liquor. The feedstock was pre-heated to the reactor temperature, 240 °C, in the mixer tank (Figure 1). Prior to the reactor the feedstock was filtered through a 10 micron filter to remove any larger particles. The reactor was pressurized with nitrogen for a tightness test.

The reactor length was 330 mm and the internal diameter was 4.0 mm. The reactor was loaded with a solid catalyst, in a 1:1 mass ratio of inert quartz (100-350 µm) filling material at a total volume of 4.15 ml. The solid catalyst was Pt/ZrO₂, (1% platinum on zirconia). Hydrogen was added to the liquid feed at a constant flow rate of 3.5 l/h (STP conditions). The liquid feed mass flow was 7.2 g/h (6.29 ml/h) giving a hydrogen/liquid feed flow ratio (referred to as GTL) of 556.The pressure in the reactor was 100 bar. The residence time in the rector was 30 minutes. The feedstock was passed through the reactor and showed no coke formation according to reactor pressure.

The bio-oil yield was 28%. The mass balance was determined as mass flow of the liquid material leaving the reactor divided by the mass flow of the feed entering the reactor. The mass balance was 28%.

## Claims

1. A process for continuously producing bio-oil comprising the steps of
a) forming a black liquor composition in a mixing tank (T) by mixing
- kraft black liquor,
- acidifying agent (AA1), in an amount sufficient to adjust the hydroxide ion concentration of the black liquor to 1-40 g/l, preferably 5-15 g/l based on the volume of black liquor;
b) introducing the black liquor composition into a reactor (R), applying a pressure of 5-150 bar of H₂ or H_{2/}CO, and a hydrogen/ black liquor composition flow ratio of 50-3000 l/l, preferably 100-600 l/l, and reacting the black liquor composition
- at 220-350 °C for 10-120 minutes, preferably 30-60 minutes in the absence of a solid catalyst; or,
- at 180-240 °C for 10-120 minutes, preferably 30-60 minutes, in the presence of a solid catalyst,
thereby causing depolymerization of lignin in the black liquor composition;
c) cooling the composition to a temperature below the boiling point of a solvent to be added in a subsequent step;
d) acidifying the composition by adding one or more acidifying agents (AA2) until a pH of 4-5 is reached;
e) adding a solvent (S) to the composition, in order to extract oil from the composition;
f) separating the composition by phase separation in a first separation step (SI) into
- an oil phase (A) comprising solvent, oil, and organic acids,
- a first water phase (B) comprising water, salts and non-depolymerized lignin solids,
- a second water phase (CI) comprising water and salts;
g) filtering (F2) the first phase (A) to remove any particles;
h) desalting the filtered first phase (A) by
I) washing it by adding water and separating by phase separation in a second separation step (S2) into
- an oil phase (D) comprising oil and solvent,
- a third water phase (C2) comprising salts; or
II) adding adsorbent and/or absorbent material or ion exchange material, or combinations thereof;
i) evaporating (E2) the solvent comprised in the oil phase (D), thus obtaining a bio-oil;
j) recycling solvent evaporated in step i) to step e).

2. The process of claim 1, wherein water of one or more of the first water phase (B), the second water phase (CI), or the third water phase (C2) is added in step a), diluting the black liquor volume by 25-100 % based on the initial black liquor volume, said water having a salt concentration of 5-30 weight-% based on the weight of water.

3. The process of claim 1, wherein salt is added after the reaction in step b), in the form of particulate salt, preferably sodium sulphate and/or electric filter ash, or in the form of water of one or more of the first water phase (B), the second water phase (C1), and the third water phase (C2), said water having a salt concentration of 5-30 weight-% based on the weight of water.

4. The process of any one of claims 1-3, wherein the solvent added in step e) is non-miscible with water, and has a lower density than the first and second water phases (B, C1), and is preferably a polar solvent, more preferably any one of ethyl acetate, methyl isobutyl ketone (MIBK), methyl-tetrahydrofuran, and benzyl alcohol, or combinations thereof, wherein the solvent (S) added in step e) preferably has a temperature of 20-50 °C.

5. The process of any one of claims 1-4, wherein the solvent (S) is added in step e) in excess to the mass of bio-oil contained in composition.

6. The process of any one of claims 1-5, wherein the acidifying agents (AA1) added in step a), and (AA2) added in step d), respectively, are any one of CO₂, H₂S, SO₂, sulphuric acid, or acidic process water having pH 1-3, or combinations thereof.

7. The process of any one of claims 1-6, wherein the acidifying agents (AA2) added in step d) is added successively during a time period of 45-60 minutes.

8. The process of any one of claims 1-7, wherein a carbonium and/or arenium ion scavenger and/or a lubricant, and/or a radical scavenger, and/or an oxygen atom transfer agent (OTA), or combinations thereof, is added to the black liquor composition in step a),
- said carbonium and/or arenium ion scavenger preferably being any one of phenol, 2-naphtol, catechol, methyl catechol, thymol, anisole, guaiacol, cresol, toluene, o-, m-, p- xylene, and p-cymene, or combinations thereof;
- said lubricant preferably being any one of toluene, o-, m-, p-xylene, p-cymene, gasoline, and diesel, or combinations thereof;
- said radical scavenger, preferably being any one of stilbene, such as piceatannol, methyl piceatannol and resveratrol, or combinations thereof; and
- said oxygen atom transfer agent (OTA) preferably being any one of anthraquinone, flavone-derived tannins, tannins with flavonoid units containing a carbonyl carbon, menadione, and quercetin, or combinations thereof.

9. The process of any one of claims 1-8, wherein lignin powder is added to the black liquor composition in step a), preferably in an amount of 40-200 weight-% of the lignin content of the black liquor, more preferably in an amount of 50-100 weight-%.

10. The process of any one of claims 1-9, wherein the phase separation step f) is initiated by agitation at 1-10 rpm, preferably 4-5 rpm for 5-30 seconds, and allowed to proceed without agitation for 15-30 minutes, or is performed with continuous stirring at 1-10 rpm, preferably 4-5 rpm.

11. The process of any one of claims 1-10, wherein one or more of the first water phase (B), the second water phase (C1) and the third water phase (C2) are led to an evaporation step (E1), in which any solvent comprised in the water is evaporated, and led back to step e).

12. The process of any one of claims 1-11, wherein the bio-oil after step i) has a salt content of 0-10 ppm.

13. The process of any one of claims 1-12, wherein the first water phase (B) comprising water, salts and non-depolymerized lignin solids is filtered (F3) to separate non-depolymerized lignin from the water, and drying the separated non-depolymerized lignin to obtain lignin powder.

14. The process of any one of claims 1-13, wherein the bio-oil after step i) is subjected to distillation or reactive distillation (DTI), whereby aromatic monomers contained in the bio-oil are separated and returned to the process and added to the black liquor composition in step a) as ion carbonium or arenium scavenger.

15. The process of any one of claims 1-14, wherein water of the third water phase (C2), which is separated from the second separation step (S2) is subjected to an extended water wash, comprising
- adding Na₂SO₄ or electric filter ash to the water of the third water phase (C2) in an amount sufficient to give a saturated solution;
- separating the saturated solution by phase separation into a solvent phase (S) and a salt saturated water phase (Cs);
- separating the solvent phase by distillation (DT2), so that solvent, and organic acids (OA), and aromatic monomers (AM) are separated from each other;
- separating the Na₂SO₄ or electric filter ash from the salt saturated water phase (Cs) by filtration (F4).

## Patentansprüche

1. Verfahren zur kontinuierlichen Herstellung von Bioöl, umfassend die Schritte
a) Bilden einer Schwarzlaugenzusammensetzung in einem Mischtank (T) durch Mischen von
- Kraft-Schwarzlauge
- Säuerungsmittel (AA1), in einer Menge, die ausreicht, um die Hydroxidionenkonzentration der Schwarzlauge auf 1 - 40 g/l, bevorzugt 5 - 15 g/l, bezogen auf das Volumen von Schwarzlauge, einzustellen,
b) Einführen der Schwarzlaugenzusammensetzung in einen Reaktor (R) Anwenden eines Druckes von 5 - 150 bar von H₂ oder H_{2/}CO, und eines Wasserstoff/Schwarzlaugenzusam mensetzungs-Durchflussverhältnisses von 50 - 2000 l/l, bevorzugt 100 - 600 l/l, und Umsetzen der Schwarzlaugenzusammensetzung
- bei 220 - 350°C für 10 - 120 Minuten, bevorzugt 30 - 60 Minuten in Abwesenheit eines festen Katalysators; oder
- bei 180 - 240°C für 10 - 120 Minuten, bevorzugt 30 - 60 Minuten, in Gegenwart eines festen Katalysators,
wodurch Depolymerisation von Lignin in der Schwarzlaugenzusammensetzung verursacht wird;
c) Kühlen der Zusammensetzung auf eine Temperatur unterhalb des Siedepunkts eines Lösungsmittels, das in einem nachfolgenden Schritt zugegeben werden soll;
d) Ansäuern der Zusammensetzung durch Zugeben eines oder mehrerer Säuerungsmittel (AA2), bis ein pH-Wert von 4 - 5 erreicht ist;
e) Zugeben eines Lösungsmittels (S) zu der Zusammensetzung, um Öl aus der Zusammensetzung zu extrahieren;
f) Trennen der Zusammensetzung durch Phasentrennung in einem ersten Trennschritt (SI) in
- eine Ölphase (A), umfassend Lösungsmittel, Öl und organische Säuren,
- eine erste Wasserphase (B), umfassend Wasser, Salze und nicht depolymerisierte Ligninfeststoffe,
- eine zweite Wasserphase (CI), umfassend Wasser und Salze;
g) Filtern (F2) der ersten Phase (A), um beliebige Partikel zu entfernen;
h) Entsalzen der gefilterten ersten Phase (A) durch
I) Waschen durch Zugeben von Wasser und Trennen durch Phasentrennung in einem zweiten Trennschritt (S2) in
- eine Ölphase (D) umfassend Öl und Lösungsmittel,
- eine dritte Wasserphase (C2) umfassend Salze; oder
II) Zugeben von Adsorbtions- und/oder Absorptionsmaterial oder lonenaustauschermaterial oder Kombinationen davon;
i) Verdampfen (E2) des Lösungsmittels, das in der Ölphase (D) enthalten ist, wodurch ein Bioöl erhalten wird;
j) Recyceln des Lösungsmittels, das in Schritt i) verdampft wurde, zu Schritt e).

2. Verfahren nach Anspruch 1, wobei Wasser von einer oder mehreren der ersten Wasserphase (B), der zweiten Wasserphase (CI) oder der dritten Wasserphase (C2) in Schritt a) zugegeben wird, wobei das Schwarzlaugenvolumen um 25 - 100% bezogen auf das anfängliche Schwarzlaugenvolumen verdünnt wird, wobei das Wasser eine Salzkonzentration von 5 - 30 Gew.-% bezogen auf das Gewicht von Wasser aufweist.

3. Verfahren nach Anspruch 1, wobei Salz nach dem Umsetzen in Schritt b) in Form von partikelförmigem Salz, bevorzugt Natriumsulfat und/oder Elektrofilterasche oder in Form von Wasser von einer oder mehreren der ersten Wasserphase (B), der zweiten Wasserphase (C1) und der dritten Wasserphase (C2) zugegeben wird, wobei das Wasser eine Salzkonzentration von 5 - 30 Gew.-%, bezogen auf das Gewicht von Wasser aufweist.

4. Verfahren nach einem der Ansprüche 1 - 3, wobei das Lösungsmittel, das in Schritt e) zugegeben wurde, nicht mit Wasser mischbar ist und eine geringere Dichte als die ersten und zweiten Wasserphasen (B, C1) aufweist und bevorzugt ein polares Lösungsmittel ist, stärker bevorzugt ein beliebiges von Ethylacetat, Methylisobutylketon (MIBK), Methyltetrahydrofuran und Benzylalkohol oder Kombinationen davon,
wobei das Lösungsmittel (S), das in Schritt e) zugegeben wurde, bevorzugt eine Temperatur von 20 - 50°C aufweist.

5. Verfahren nach einem der Ansprüche 1 - 4, wobei das Lösungsmittel (S) in Schritt e) im Überschuss zu der Masse an Bioöl, das in der Zusammensetzung enthalten ist, zugegeben wird.

6. Verfahren nach einem der Ansprüche 1 - 5, wobei die Säuerungsmittel (AA1), die in Schritt a) zugegeben wurden, bzw. (AA2), die in Schritt d) zugegeben wurden, ein beliebiges von CO₂, H₂S, SO₂, Schwefelsäure oder saures Prozesswasser mit einem pH-Wert von 1 - 3 oder Kombinationen davon sind.

7. Verfahren nach einem der Ansprüche 1 - 6, wobei die Säuerungsmittel (AA2), die in Schritt d) zugegeben wurden, nacheinander während eines Zeitraums von 45 - 60 Minuten zugegeben werden.

8. Verfahren nach einem der Ansprüche 1 - 7, wobei ein Carbonium- und/oder Areniumionenfänger und/oder ein Schmiermittel und/oder ein Radikalfänger und/oder ein Sauerstoffatomtransfermittel (OTA) oder Kombinationen davon zu der Schwarzlaugenzusammensetzung in Schritt a) gegeben wird,
- wobei der Carbonium- und/oder Areniumionenfänger bevorzugt ein beliebiges von Phenol, 2-Naphtol, Catechol, Methylcatechol, Thymol, Anisol, Guajakol, Kresol, Toluol, o-, m-, p-Xylol und p-Cymol oder Kombinationen davon ist;
- wobei das Schmiermittel bevorzugt ein beliebiges von Toluol, o-, m-, p-Xylol, p-Cymol, Benzin und Diesel oder Kombinationen davon ist;
- wobei der Radikalfänger bevorzugt ein beliebiges von Stilben, wie zum Beispiel Piceatannol, Methylpiceatannol und Resveratrol oder Kombinationen davon ist; und
- wobei das Sauerstoffatomtransfermittel (OTA) bevorzugt ein beliebiges von Anthrachinon, Flavon-abgeleiteten Tanninen, Tanninen mit Flavonoideinheiten, enthaltend einen Carbonylkohlenstoff, Menadion und Quercetin, oder Kombinationen davon ist.

9. Verfahren nach einem der Ansprüche 1 - 8, wobei Ligninpulver zu der Schwarzlaugenzusammensetzung in Schritt a) gegeben wird, bevorzugt in einer Menge von 40 - 200 Gew.-% des Ligningehalts der Schwarzlauge, stärker bevorzugt in einer Menge von 50 - 100 Gew.-%.

10. Verfahren nach einem der Ansprüche 1 - 9, wobei der Phasentrennungsschritt f) durch Rühren bei 1 - 10 rpm, bevorzugt 4 - 5 rpm für 5 - 30 Sekunden eingeleitet wird und für 15 - 30 Minuten ohne Rühren fortfahren gelassen wird, oder unter kontinuierlichem Rühren bei 1 - 10 rpm, bevorzugt 4 - 5 rpm durchgeführt wird.

11. Verfahren nach einem der Ansprüche 1 - 10, wobei eine oder mehrere der ersten Wasserphase (B), der zweiten Wasserphase (C1) und der dritten Wasserphase (C2) zu einem Verdampfungsschritt (E1) geführt werden, in welchem ein beliebiges Lösungsmittel, das in dem Wasser enthalten ist, verdampft und zu Schritt e) zurückgeführt wird.

12. Verfahren nach einem der Ansprüche 1 - 11, wobei das Bioöl nach Schritt i) einen Salzgehalt von 0 - 10 ppm aufweist.

13. Verfahren nach einem der Ansprüche 1 - 12, wobei die erste Wasserphase (B), umfassend Wasser, Salze und nicht depolymerisierte Ligninfeststoffe, filtriert (F3) wird, um nicht depolymerisiertes Lignin vom Wasser zu trennen, und Trocknen des getrennten nicht depolymerisierten Lignins, um Ligninpulver zu erhalten.

14. Verfahren nach einem der Ansprüche 1 - 13, wobei das Bioöl nach Schritt i) einer Destillation oder Reaktivdestillation (DTI) unterzogen wird, wobei aromatische Monomere, die im Bioöl enthalten sind, getrennt werden und dem Verfahren zurückgeführt werden und zu der Schwarzlaugenzusammensetzung in Schritt a) als Carbonium- oder Areniumionenfänger gegeben werden.

15. Verfahren nach einem der Ansprüche 1 - 14, wobei Wasser der dritten Wasserphase (C2), das von dem zweiten Trennschritt (S2) getrennt ist, einer ausgedehnten Wasserwäsche unterzogen wird, umfassend
- Zugeben von Na₂SO₄ oder Elektrofilterasche zu dem Wasser der dritten Wasserphase (C2) in einer Menge, die ausreicht, um eine gesättigte Lösung zu ergeben;
- Trennen der gesättigten Lösung durch Phasentrennung in eine Lösungsmittelphase (S) und eine salzgesättigte Wasserphase (Cs);
- Trennen der Lösungsmittelphase durch Destillation (DT2), so dass Lösungsmittel und organische Säuren (OA) und aromatische Monomere (AM) voneinander getrennt werden;
- Trennen der Na₂SO₄ oder Elektrofilterasche von der salzgesättigten Wasserphase (Cs) durch Filtration (F4).

## Revendications

1. Un procédé de production continue de bio-huile, comprenant les étapes consistant à
a) former une composition de liqueur noire dans un réservoir de mélange (T) en mélangeant
- de la liqueur noire kraft,
- un agent acidifiant (AA1), en une quantité suffisante pour ajuster la concentration en ions hydroxyde de la liqueur noire à 1 à 40 g/l, de préférence à 5 à 15 g/l sur la base du volume de liqueur noire ;
b) introduire la composition de liqueur noire dans un réacteur (R), appliquer une pression de 5 à 150 bar de H₂ ou H_{2/}CO, et un rapport d'écoulement hydrogène/composition de liqueur noire de 50 à 3000l/l, de préférence 100 à 600l/l, et faire réagir la composition de liqueur noire
- à 220 à 350 °C pendant 10 à 120 minutes, de préférence 30 à 60 minutes, en l'absence de catalyseur solide ; ou,
- à 180 à 240 °C pendant 10 à 120 minutes, de préférence 30 à 60 minutes, en présence d'un catalyseur solide,
provoquant ainsi la dépolymérisation de la lignine dans la composition de liqueur noire ;
c) laisser refroidir la composition à une température inférieure au point d'ébullition d'un solvant à ajouter dans une étape ultérieure ;
d) acidifier la composition en ajoutant un ou plusieurs agents acidifiants (AA2) jusqu'à ce qu'un pH de 4 à 5 soit atteint ;
e) ajouter un solvant (S) à la composition, afin d'extraire l'huile de la composition ;
f) séparer la composition par séparation de phases dans une première étape de séparation (S1) en
- une phase huileuse (A) comprenant du solvant, de l'huile et des acides organiques,
- une première phase aqueuse (B) comprenant de l'eau, des sels et des solides de lignine non dépolymérisés,
- une seconde phase aqueuse (C1) comprenant de l'eau et des sels ;
g) filtrer (F2) la première phase (A) pour éliminer des particules éventuelles ;
h) dessaler la première phase filtrée (A) par
I) un lavage par addition d'eau et la séparation par séparation de phases dans une deuxième étape de séparation (S2) en
- une phase huileuse (D) comprenant de l'huile et du solvant,
- une troisième phase aqueuse (C2) comprenant des sels ; ou
II) en ajoutant un agent adsorbant et/ou du matériau adsorbant ou un matériau échangeur d'ions, ou des combinaisons de ceux-ci ;
i) évaporer (E2) le solvant compris dans la phase huileuse (D), obtenant ainsi une bio-huile ;
j) recycler le solvant évaporé dans l'étape i) vers l'étape e).

2. Le procédé selon la revendication 1, dans lequel de l'eau d'une ou plusieurs de la première phase aqueuse (B), la deuxième phase aqueuse (C1) ou la troisième phase aqueuse (C2) est ajoutée à l'étape a), en diluant le volume de liqueur noire de 25 à 100% sur la base du volume initial de liqueur noire, ladite eau ayant une concentration en sel de 5 à 30% en poids sur la base du poids de l'eau.

3. Le procédé selon la revendication 1, dans lequel du sel est ajouté après la réaction de l'étape b), sous la forme de sel particulaire, de préférence du sulfate de sodium et/ou des cendres de filtre électrique, ou sous la forme d'eau d'une ou plusieurs de la première phase aqueuse (B), de la deuxième phase aqueuse (C1) et de la troisième phase aqueuse (C2), ladite eau ayant une concentration en sel de 5 à 30 % en poids sur la base du poids de l'eau.

4. Le procédé selon l'une quelconque des revendications 1 à 3, dans lequel le solvant ajouté à l'étape e) est non miscible à l'eau, et a une densité inférieure à celle des première et deuxième phases aqueuses (B, C1), et est de préférence un solvant polaire, de manière plus préférée l'un quelconque de l'acétate d'éthyle, de la méthylisobutylcétone (MIBC), du méthyltétrahydrofuranne et de l'alcool benzylique, ou des combinaisons de ceux-ci, dans lequel le solvant (S) ajouté à l'étape e) a de préférence une température de 20 à 50°C.

5. Le procédé selon l'une quelconque des revendications 1 à 4, dans lequel le solvant (S) est ajouté à l'étape e) en excès à la masse de bio-huile contenue dans la composition.

6. Le procédé selon l'une quelconque des revendications 1 à 5, dans lequel les agents acidifiants (AA1) ajoutés à l'étape a) et (AA2) ajoutés à l'étape d), respectivement, sont l'un parmi C0₂, H₂S, SO₂, acide sulfurique ou eau de traitement acide ayant un pH de 1 à 3, ou des combinaisons de ceux-ci.

7. Le procédé selon l'une quelconque des revendications 1 à 6, dans lequel les agents acidifiants (AA2) ajoutés à l'étape d) sont ajoutés successivement pendant une période de temps de 45 à 60 minutes.

8. Le procédé selon l'une quelconque des revendications 1 à 7, dans lequel un capteur d'ion carbonium et/ou arénium et/ou un lubrifiant, et/ou un capteur de radicaux, et/ou un agent de transfert d'atomes d'oxygène (ATO), ou des combinaisons de ceux-ci, sont ajoutés à la composition de liqueur noire dans l'étape a),
- ledit capteur d'ion carbonium et/ou arénium étant de préférence l'un quelconque des composés suivants : phénol, 2-naphtol, catéchol, méthylcatéchol, thymol, anisole, gaïacol, crésol, toluène, o-, m-, p-xylène et p-cymène, ou des combinaisons de ceux-ci ;
- ledit lubrifiant étant de préférence l'un quelconque des composés suivants : toluène, o-, m-, p-xylène, p-cymène, essence et diesel, ou des combinaisons de ceux-ci ;
- ledit capteur de radicaux étant de préférence l'un quelconque des composés suivants : stilbène, tel que le piceatannol, le méthyl piceatannol et le resvératrol, ou des combinaisons de ceux-ci ; et
- ledit agent de transfert d'atomes d'oxygène (ATO) étant de préférence l'un quelconque des composés suivants : anthraquinone, tanins dérivés de flavones, tanins à unités flavonoïdes contenant un carbone carbonyle, ménadione et quercétine, ou des combinaisons de ceux-ci.

9. Le procédé selon l'une quelconque des revendications 1 à 8, dans lequel de la poudre de lignine est ajoutée à la composition de liqueur noire dans l'étape a), de préférence en une quantité de 40 à 200 % en poids de la teneur en lignine de la liqueur noire, plus préférablement en une quantité de 50 à 100 % en poids.

10. Le procédé selon l'une quelconque des revendications 1 à 9, dans lequel l'étape de séparation des phases
f) est initiée par agitation à 1 à 10 tours/minute, de préférence 4 à 5 tours/minute pendant 5 à 30 secondes, et laissée sans agitation pendant 15 à 30 minutes, ou est effectuée avec une agitation continue à 1 à 10 tours/minute, de préférence 4 à 5 tours/minute.

11. Le procédé selon l'une quelconque des revendications 1 à 10, dans lequel une ou plusieurs de la première phase aqueuse (B), la deuxième phase aqueuse (C1) ou la troisième phase aqueuse (C2) sont amenées à une étape d'évaporation (E1), dans laquelle tout solvant compris dans l'eau est évaporé, et ramenées à l'étape e).

12. Le procédé selon l'une quelconque des revendications 1 à 11, dans lequel la bio-huile après l'étape i) a une teneur en sel de 0 à 10 ppm.

13. Le procédé selon l'une quelconque des revendications 1 à 12, dans lequel la première phase aqueuse (B) comprenant de l'eau, des sels et des solides de lignine non dépolymérisée est filtrée (F3) pour séparer la lignine non dépolymérisée de l'eau, et le séchage de la lignine non dépolymérisée séparée pour obtenir de la poudre de lignine.

14. Le procédé selon l'une quelconque des revendications 1 à 13, dans lequel la bio-huile après l'étape i) est soumise à une distillation ou à une distillation réactive (DTI), par laquelle les monomères aromatiques contenus dans la bio-huile sont séparés et renvoyés au procédé et ajoutés à la composition de la liqueur noire à l'étape a) comme un capteur d'ion carbonium ou d'arénium.

15. Le procédé selon l'une quelconque des revendications 1 à 14, dans lequel l'eau de la troisième phase aqueuse (C2), qui est séparée de la deuxième étape de séparation (S2) est soumise à un lavage à l'eau prolongé, comprenant
- ajouter du Na₂SO₄ ou des cendres de filtre électrique à l'eau de la troisième phase aqueuse (C2) en une quantité suffisante pour donner une solution saturée ;
- séparer la solution saturée par séparation de phases en une phase solvant (S) et une phase d'eau saturée en sel (Cs) ;
- séparer la phase solvant par distillation (DT2), de sorte que le solvant, et les acides organiques (OA), et les monomères aromatiques (AM) soient séparés les uns des autres ;
- séparer le Na₂SO₄ ou les cendres de filtre électrique de la phase d'eau saturée en sel (Cs) par filtration (F4).
